# EUROPEAN PATENT SPECIFICATION

(11) **EP 2 106 894 B1**
(45) Date of publication and mention of the grant of the patent: **22.10.2014**
(21) Application number: 07851832.1
(22) Date of filing: 21.12.2007
(51) Int. Cl.: B29B 17/00, B29B 17/02

(54) **DEVICE FOR DESTROYING A TIRE RUBBER ENVELOPE AND A SYSTEM FOR LOADING AND UNLOADING IT**
VORRICHTUNG ZUR ZERSTÖRUNG EINES REIFENGUMMIMANTELS UND SYSTEM ZU DESSEN LADEN UND ENTLADEN
APPAREIL DE DESTRUCTION DE L'ENVELOPPE EN CAOUTCHOUC DE PNEUS ET SYSTÈME DE CHARGEMENT ET DE DÉCHARGEMENT DE CELUI-CI

(30) Priority: 27.12.2006 LT 2006097
(43) Date of publication of application: 07.10.2009
(73) Proprietor: UAB Devulco, 07150 Vilnius (LT)
(72) Inventor: MIRMOV, Naum, IL-21059 Maalot (IL); KHODOS, David, IL-24952 Maalot (IL); RAKHMILEVITCH, Boris, IL-17091 Nazeret-Illit (IL); VERNYI, Adolf, IL-56332 Yehud (IL); VASSILIEV, Aleksey, IL-44837 Ma'alot (IL)
(74) Representative: Kucinskas, Leonas Antanas
(86) International application number: PCT/LT2007/000010
(87) International publication number: WO 2008/078975

(56) References cited:
- EP-A1- 0 816 035
- CZ-B6- 292 487
- RU-C1- 2 051 035
- RU-C1- 2 111 859
- RU-U1- 39 530
- US-A- 5 492 657

## Description

### Technical Field

The invention relates to waste tires reprocessing. The offered apparatus, its loading and unloading system are intended for technologies of recycling vehicles waste tires. Waste tires recycling combined technologies are the most suitable for this apparatus. In this technology of tires reprocessing there is no shattering and pulverization. In combined technology the whole tire is loaded into chamber and compressed by mechanical pressure. The tire placed in apparatus is processed by ozone-containing gas. Then remains of rubber with cord is cooled up (frozen) to rubber embrittle cryogenic temperature and separate from a cord by means of one known mechanical methods.

### Background Art

The construction of the apparatus, its loading and unloading system depends of waste tire recycling technology. The most common technologies are: mechanical crushing of a tire and mechanical crushing with subsequent cryogenic temperature freezing. Other used recycling methods are processing with ozone-containing gas and method of extrusion. In known technologies, usually tires previously are crushed.

Few constructions of the apparatus for recycling of vehicles waste tires and also tire loading and rubber crumb unloading systems are described in the patents:
Patent US 5 492 657, U.S. Cl. 264/37, 83, 319; 204/176, 24;
Patent US 5 904 305, U.S. Cl. 241/79.1, 157, 236, 243;
Patent US 6 354 523 B1, U.S. CI. 241/19, 21, 23, 172 5; 525/237;
Patent US 6 425 540, U.S. Cl. 241/65; 241/235, 236;
Patent US 6 579 950 B2, U.S. Cl. 525/388; 241/235, 236; 525/332 8; 525/332 4;
Patent US 6 581 861 B1, U.S. Cl. 241/159; 241/DIG.31; 241/DIG.38, 241/65,159;
Patent US 2004173699, Int. CI. B29B 17/02;
Patent EP0482723, Int. CI. B29B 17/02; C08J 11/16; B02C 23/34;
Patent EP1016508, Int. CI. B29B 17/02; C08J 11/16; B02C 23/34;
Patent EP 0816035, Cl. B29B 17/00, C08J 11/10
Patent RU 2191692, Int. CI. B29B 17/00; B02C 23/24; C08J 11/16; B29K 21/00;
Patent RU 2265516, Int. CI. B29B 17/00; B29K 21/00;
Patent LT 2005 018, Int. CI. B29B 17/00; B02C 23/24; B29K 21/00;
Patent LT 2005 084, Int. CI. B29B 17/00; B02C 23/24; B29K 21/00;
Patent application US 60/716 572, US Cl. 241/1; 241/23, 245; 525/332.8; 525/332.4;

Various designs of the apparatus for recycling waste tires and systems of their loading are known.

The apparatus for recycling waste tires is described in patent US 5 492 657, Cl. 264/17, 37, 83, 319 contain vertical shaft in height divided into few chambers. Chambers are separated one from another by a lock-gate. In working chamber there are placed two pairs of pinch rollers the processing tire is moving between it. Mechanical stresses are made by pinch rollers. Simultaneously, working gas (air with ozone) is fed to a tire. After processing the tire is thrown down into intermediate chamber, and then is fed into crushing machine. The loading system includes belt conveyor and collecting chamber. Described apparatus and system for its loading have following disadvantages:
- there is no tire directing into clearance between rollers device in the apparatus;
- a compression of a tire between two pairs of rollers does not make uniform stresses in rubber;
- loading system comprise conveyor and collecting chamber, where the tire from the conveyor is fed into lock-gate, and it reduces the reliability of sealing between working and collecting chambers.

The apparatus for recycling waste tires and system for its loading under the patent LT 5368, Int. Cl. B29B 17/00, 02; C08J 11/16 is known. The apparatus consist of rectangular chamber with bottom as inverted pyramid. The chamber has folding doors. In the bottom there is bunker with the shutter. On the cover of the chamber there are fixed slide rails.

The loading system contains rail conveyor with moving platforms. The platforms have gripping mechanisms for a moving and a feeding it by conveyor into the chamber. On the stringer of the platform there are devices for tire fixing and creating mechanical stresses. The apparatus design and its loading system have following disadvantages:
- apparatus construction is complicated it contains three door witch complicates synchronized work and potential of platform movement into chamber and out of it.
- apparatus has a chamber with a large working volume which increases the duration of tire reprocessing and complicates blowing process by ozone-containing gas.
- loading system has complicated design consisting of the rail conveyor and mobile platform. This design requires of special devices for exact fixing of the platform with regards to force device drives.

The Method of Reprocessing Industrial Rubber Articles under the patent EP 0816035 has following disadvantages:
- there is only one chamber for processing tires and because of that process of recycling is going not that fast;
- the means for fixing the processed tire are not effective;
- because of using only chamber it uses too much ozone.

### Disclosure of Invention

The apparatus for tire rubber cover destruction and system for its loading and unloading has following distinctive features.

The apparatus consists of several chambers, each of which is fixed on its own basis. The chambers are connected by pipelines for working gas or blow air feeding and for used gas suction. The chamber case is made as the cylinder with truncated side walls. The manipulator with pressure plates and a drive, for example, pneumatic type where placed into the chamber and can make reciprocal motion.

The chamber has the loading hatch produced as a cylinder sector. Waste tire by manipulator is pressed down to the pressure plates which are fixed on the inner side of the hatch. As a result of the pressure in a tire rubber cover are created mechanical stress. The hatch as well as manipulator, is supplied with a drive, for example, pneumatic type. Mechanical latches with pneumatic drive are placed on external sides of the hatch. It ensures hatch sealing at manipulator operation.

The chamber has folding bottom with a drive. The tire is fed to the hatch of the chamber by means of the carriage which is placed on the guide rails fixed along chambers. The carriage has a pusher for tire loading into the chamber.

Under the bottoms of the chambers there are vibrating conveyors. The bottom of the chamber can open without contact with walls of the conveyor. The conveyor side walls are protective structure of the apparatus. The height of one side wall is bigger than maximum diameter of a tire (for example, of passenger car) in 1.2 - 1.5 times, and the height of the opposite side wall is less than maximum diameter of a tire in 1.7 - 2.0 times. Smaller side wall has a spout stated in angle to horizontal plane, from 48° to 53°.

### Brief Description of Drawings

Fig. 1 is shown a schematic view of an apparatus for tire rubber cover destruction with unloading system.
Fig. 2 is shown view of an apparatus chamber with loading and unloading system.
Fig. 3 is shown view of a chamber case (view A - A), manipulator with pressure plates and the device for mechanical press on tire rubber cover.
Fig. 4 is shown view of folding bottom sealing with hatch.
Fig. 5 is shown view of chamber (view C) with pneumatic drive for hatch opening and closing.
Fig. 6 is shown view of mechanical latches with pneumatic drive for hatch fixation and sealing.

### Detailed Description of the Invention

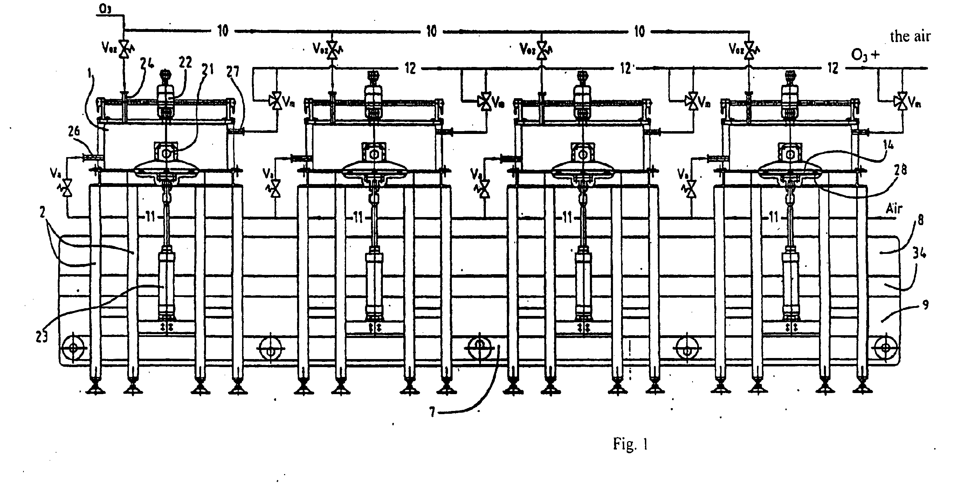

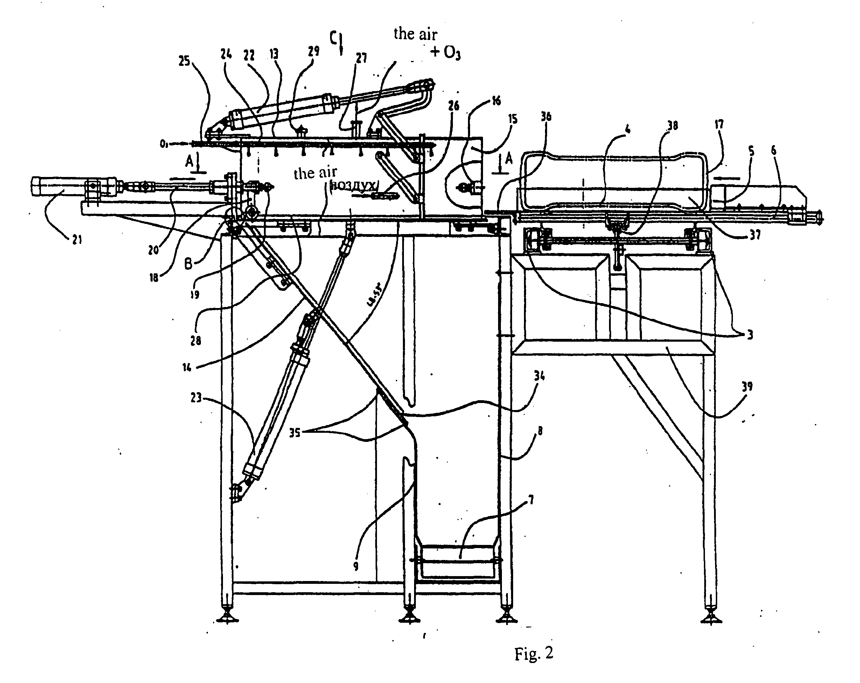

In Fig. 1 is shown schematic figure of the apparatus (view from back side), with system drives for running the apparatus. The apparatus consists of few working chambers 1, for example four chambers. Each chamber is fixed on its own base 2. Along chamber 1 (Fig. 2) there are fixed guide rails 3 on which there is placed mobile carriage 4 for providing tires to the chamber 1. The carriage 4 has a pusher 5, for example, with a pneumatic drive 6. The pusher 5 is intended for loading a tire in the chamber 1. The device has vibrating conveyor 7 placed under chambers 1. The belt of the conveyor 7 has about 3°-5° incline towards unloading. Side walls 8 and 9 of the conveyor 7 are a protective structure of the apparatus. For supplying ozone, blow air and used gas suction in chambers 1, they were connected with each other by pipelines 10, 11 and 12. On to the pipeline 10 for a supplying gas (ozone) into the chambers 1 there are placed solenoid-operated valves Voz. Onto the pipeline 11 for supplying blow air there are placed automatically operated valves Va and onto the pipeline 12 for a used gas suction there are placed thee-way automatic valves Vm.

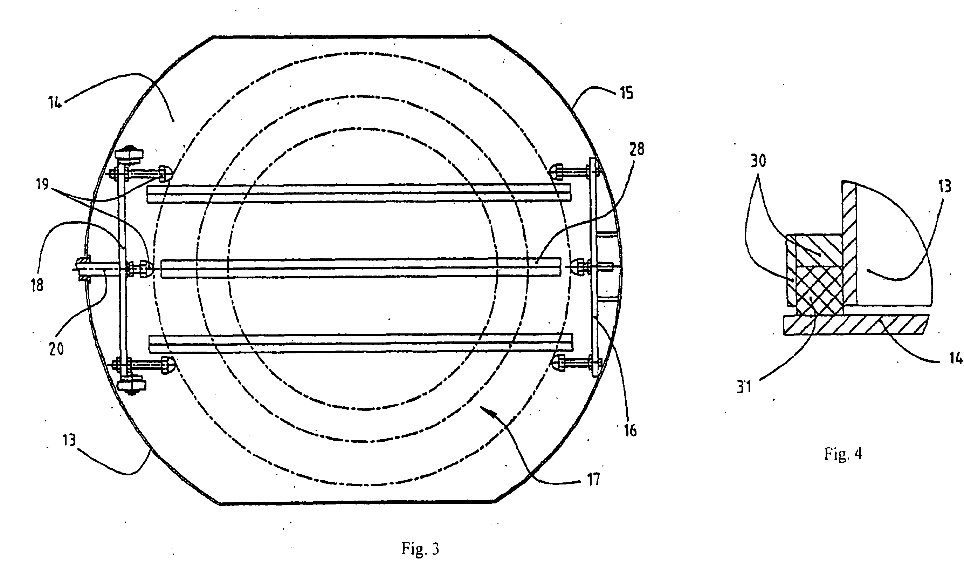

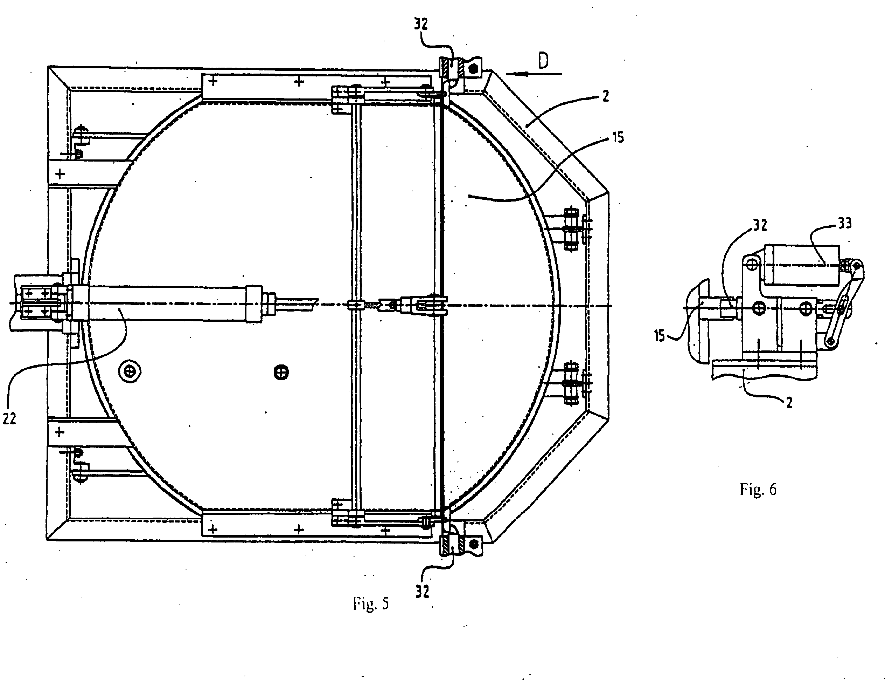

In Fig. 2 there is shown the apparatus with loading and unloading system. In Fig. 3 there is shown chamber (view A-A). The chamber 1 consists of the case 13 with the folding bottom 14 and with the loading hatch 15 on the back side of the case. The device 16 for mechanical press of a tire rubber cover 17 is fixed on the inner side of the hatch 15. The manipulator 18 with pressure elements 19 for compression of tire cover and for creation of mechanical stresses in rubber is placed on the inner side of the case 13 opposite to the hatch 15. The manipulator 18 is fixed on the shaft 20 and has the drive 21, for example, pneumatic type. The shaft 20 and the pneumatic cylinder drive 21 are on one axis. The hatch 15 has the drive 22, and the folding bottom 14 has the drive 23. The drive 22 of the hatch is on the outer side of the case 13. The drive 23 of the folding bottom 14 is fixed on the base 2 of the apparatus. The system of levers creates reliable closed bottom sealing. Inside the case 13 is placed separating collector 24 for feeding working gas flow uniformly to a waste tire 17 surface. The collector 24 is connected to the branch pipe 25. The socket 26 and 27 for a feeding blow air into the chamber and for suction of used gas are welded into the case 13. Runners 28 are fixed on the inner side the folding bottom 14. The tire 17 before processing is placed on the runners 28. The chamber 1 has the safety valve 29. The construction of the folding bottom sealing with hatch is shown on Fig.4. Gasket material 31 is attached through all perimeter of case 13 box-type trough 30. This construction allows dispose of flanges on the case, folding bottom and hatch. Gasket material in the box-type trough ensures the reliable and smooth sealing with minimal press force of the pneumatic cylinder. Construction of the chamber (view C) is shown on Fig. 5. Mechanical latches 32, shown on Fig. 6, are placed on the outer sides of the hatch. Mechanical latches 32 have the pneumatic drive 33. Cylinder of the pneumatic drive is fixed on the basis 2.

The side walls 8 and 9 of the conveyor 7 have a different height. The height of the front side wall 8 is 1.2-1.5 times bigger than maximum diameter of a tire for example, of passenger car. The height of the wall 9 is 0.5-0.6 times smaller than abovementioned tire. The wall 9 has the spout 34 stated in an angle to the horizontal plane from 48° to 53°. Stopping devices 35 are placed onto the spout 34 for ensuring nonimpact opening of the bottom 14.

Platform 36 of the carriage 4 is opened from the hatch 15 side and there are borders 37 on other three sides. The carriage 4 during tire loading is placed on the guide rails 3 thus the surface of the platform 36 to be higher in 10-15 mm than bottom 14 surface. As a result of it a tire 17 can be placed right onto the runners 28. The carriage 4 movement along chambers 1 is implemented by drive 38 for example chain-drive. The guide rails 3 are placed on the supporting frame 39 which is connected to the apparatus base 2.

### Description of Embodiment

The offered apparatus and system for its loading and unloading operates as follows.

A clean tire 17 is placed on the platform 36 of the carriage 4. The carriage 4 moves on the guide rails 3 and is set in front of one processing chambers 1 hatch 15. The bottom 14 is moved 10-15 mm down and opens the hatch 15. A tire 17 by pusher 5 is pushed onto the chambers 1 bottom 14. Then the hatch 15 is closing and the bottom 14 is pressed to the gasket material 31 creating proper hermetic of the chamber 1. When the hatch 15 is closed the opening is fixing tightly by the latches 32 and providing compensation of the force influence of manipulator 18. As soon as, the hatch 15 is in the working position and chamber is hermetic the carriage 4 is moved back to the loading position and provides next tire to the following chamber. This cambers drive 21 of the manipulator 18 is switched on. Manipulator 18 fixed on the shaft 20, compresses and makes mechanical stresses in the tire. A tire 17 is compressed by manipulator and device 16 pressure plates 19. Then rubber gets mechanical stress and appears tire form deformations. Three-way automatic valve Vm is opening for used gas suction and simultaneously opening the valve Voz for ozone feeding to this chamber.

At the feeding of ozone to the surface of a tire rubber cover in the spots of manipulator 18 and device 16 impact, results a tire partly destructs with forming a rubber crumb. A feed of ozone and accordingly, destruction of a tire rubber cover continues from 5 to 8 minutes. Duration of the processing depends on weight and sizes of the tire. During destruction by ozone the manipulator 18 makes few reciprocal motions to create various mechanical stresses. At the end of the tire processing by ozone the valve Voz is closing, and valve Va for feeding blow air to the chamber 1 is opening. The duration of blowing chamber 1 cavity takes 1.0-1.5 minutes. Then, closes the valve Va, puts down the bottom 14 to the stopping devices 35 and opens the hatch 15. Then the bottom 14 is lowering, pieces of a tire protector parts, rubber crumb, cord with remains of a rubber is throw down on the conveyor 7. Tire cord part thrown on the conveyor 7 on the supporting side. The remains of a tire can roll because the conveyor belt is placed with an incline. A rubber crumb is thrown into the bunker (not shown on figures), and cord with a rubber remains moves to a following technological operation of the process for example to the intensive freezing by cryogenic refrigerant. As soon as the chamber is vacated from the processed tire and a rubber crumb, a new tire is feed by a carriage 4 to the working place. The bottom 14 is lowered to set level (from 10 to 15 mm to working position). By pusher 5 the tire is passed in to the chamber, closes the hatch 15, puts the bottom into working position and repeats tire rubber cover destruction process in this chamber.

### The basic advantages of offered apparatus

Advantages of the apparatus enable to obtain the purpose of the invention: simplifying waste tires loading system in the apparatus for waste tires processing and unloading tire covers processed by ozone. Decrease of the ozone consumption and decrease of the apparatus capacity, increasing the efficiency of the apparatus.
1. The apparatus consist of several chambers. One tire can be placed and the rubber cover destruction is made by ozone in each chamber. Construction of the chamber allows processing the full tire surface evenly with decrease of ozone consumption.
2. The loading system enable place the tire in an axis of the chamber. This reduces the force for tire deformation and reduces strain on drive of the power mechanism.
3. The apparatus has vibrating conveyor on which the processed tires are fed. And there is possibility of maximal separation of tire protector parts and crumbs.
4. The reliable sealing of the chamber cavity is obtainable by using box-type sealing instead flange.

## Claims

1. The apparatus for tire rubber cover destruction and its loading and unloading system comprising chambers wherein the products are exposed to the action of mechanical loads and gas mixture containing ozone, **characterized in that**:
a) the apparatus consist of several chambers (1), each of which is fixed on its own basis;
b) chambers are connected by pipelines (10, 11, 12) for feeding working gas or blow air and for used gas suction;
c) mobile carriage (4) for tires feeding into chamber is placed on the guide rails (3) fixed along chamber;
d) the apparatus has a vibrating conveyor (7) with side walls (8, 9) which are protective structure of the apparatus wherein the vibrating conveyor placed under the bottom of the chambers (1) and it ensures the possibility of maximal separation of the crumbs from the other parts of tire;
e) case of the chamber is made as cylinder with truncated side walls; it has the folding bottom and loading hatch (15);
f) manipulator (18) with pressure plates is placed in the chamber and can make reciprocal motions and on the internal surface of the hatch (15) is fixed the device with analogous pressure plates for mechanical press on tire rubber cover.

2. The apparatus according to claim 1, **characterized in that** the chamber contains the hatch (15) produced as a cylinder sector form.

3. The apparatus according to claim 1, **characterized in that** the chamber contains the folding bottom (14) with the drive (22) fixed on the basis of chamber.

4. The apparatus according to claim 1, **characterized in that** the height of one side wall (8) is bigger than maximum diameter of a tire for example, of passenger car in 1.2 to 1.5 times, and the height of the opposite side wall (9) is smaller than maximum diameter of a tire in 0.5 to 0.6 times.

5. The apparatus according to claim 1, **characterized in that** smaller height wall (9 ) has a spout (34) stated in angle to horizontal plane, from 48° to 53°.

6. The apparatus according to claim 1, **characterized in that** the carriage has the reversing drive (38), for example, with chain-drive.

7. The apparatus according to claim 1, **characterized in that** the shaft of the manipulator (18) and the pneumatic cylinder drive are placed in one axis.

8. The apparatus according to claim 2, **characterized in that** mechanical latches (16) with pneumatic force cylinders (19) are placed on both sides of the hatch.

9. The apparatus according to claim 1, **characterized in that** the chamber (1) case has a box-type sealing in perimeter of the chamber and the bottom edge of the hatch.

## Patentansprüche

1. Anlage für Zerstörung von Gummiaufzügen der Reifen, ihr Be- und Abladesystem, das das Zerkleinerungsgerät beinhaltet; die Anlage **unterscheidet** sich dadurch, dass sie aus mehreren Kammern besteht, von denen jede auf ihrer Grundlage befestigt ist, und diese Kammern durch eine gemeinsame Rohrleitung für Zufuhr der Nachspülluft und Beseitigung des verbrauchten Gases verbunden sind; entlang der Kammern sind Führungsschienen befestigt, auf denen ein Wagen gesetzt ist, der für Lieferung der Reifen bis zur Öffnung der Arbeitskammer bestimmt ist, zudem hat die Anlage einen schwingungsartigen Förderer, dessen Seitenwände die Anlage einfassen; das Gehäuse der obengenannten Kammer ist ein Zylinder mit abgeschnittenen Seitenwänden und es hat einen aufklappbaren Boden und eine Öffnung, die für Unterbringung von Reifen bestimmt ist, außerdem gibt es im Inneren der Kammer einen Manipulator, der Druckelemente beinhaltet und eine Schleich-und Rückkehrhandlung ausführen kann, und an der inneren Kammerseite ist ein Gerät mit gleichartigen Druckelementen, die für mechanische Beeinflussung des Reifens bestimmt ist, angebracht.

2. Anlage laut Punkt 1, die sich dadurch **unterscheidet**, dass die Kammer eine Öffnung hat, die nach Form des Zylindersegments ausgeführt ist.

3. Anlage laut Punkt 1, die sich dadurch **unterscheidet**, dass die Kammer einen aufklappbaren Boden hat, dessen Antrieb auf dem Untergrund der Kammer befestigt ist.

4. Anlage laut Punkt 1, die sich dadurch **unterscheidet**, dass die Höhe der Randwände vom schwingungsartigen Förderer 1,2-1,5 und 0,5-0,6 des Durchmessers vom größten Reifen, z.B. Kfz-Reifen, entspricht.

5. Anlage laut Punkt 1, die sich dadurch **unterscheidet**, dass die Randwand, derer Höhe kleiner ist, eine Spitze hat, die im Winkel von 48-53° zur waagerechten Oberfläche aufgesetzt ist.

6. Anlage laut Punkt 1, die sich dadurch **unterscheidet**, dass der Wagen für Lieferung der Reifen in die Kammer einen Reversantrieb, z. B. mit Kettengetriebe, hat.

7. Anlage laut Punkt 1, die sich dadurch **unterscheidet**, dass die Stangenachse, auf der der Manipulator angebracht ist, und Zylinder des Druckantriebs vom Manipulator auf einer Achse aufgesetzt sind.

8. Anlage laut Punkt 2, die sich dadurch **unterscheidet**, dass von beiden Seiten der Öffnung mechanische Klinken angebracht sind, die die Druckkraftzylinder besitzen.

9. Anlage laut Punkt 1, die sich dadurch **unterscheidet**, dass Gehäuse der Kammer eine dosenartige Dichtung hat, die auf dem Umfang der Kammer und der Unterkante der Öffnung angebracht ist.

## Revendications

1. Équipement pour détruire le revêtement en caoutchouc des pneus, son système de chargement et de déchargement comprenant l'appareil de broyage, se différencie par le fait que l'équipement est composé de plusieurs chambres, chacune d'entre elles est fixée à sa base, ces chambres sont raccordées avec une conduite commune pour le traitement du gaz de fonctionnement et de l'air de soufflage et l'extraction du gaz de processus, et le long des chambres de travail sont fixés des rails de guidage, sur lesquelles est posé un chariot, destiné au transport près de l'orifice de la chambre de travail ; par ailleurs, l'équipement possède un transporteur vibrant, dont les parois latérales entourent l'équipement, le caisson de cette chambre est un cylindre avec des parois latérales sectionnées et il a un fond inclinable et un orifice destiné à contenir les pneus. Par ailleurs, il y a à l'intérieur de la chambre un appareil de manutention avec des éléments de pression qui peut effectuer un mouvement aller-retour, et à l'intérieur de l'orifice est fixé un appareil avec des éléments de pression similaires, destinés à agir mécaniquement sur le pneu.

2. L'équipement est analogue au point 1, mais il se différencie par le fait que la chambre a un orifice de forme cylindrique.

3. L'équipement est analogue au point 1, mais il se différencie par le fait que la chambre a un fond inférieur inclinable, dont le servomoteur est fixé sur la base de la chambre.

4. L'équipement est analogue au point 1, mais il se différencie par le fait que la hauteur des parois des rebords du transporteur vibrant correspond au diamètre du pneu le plus grand 1,2 - 1,5 et 0,5 - 0,6, par exemple, les pneus d'une voiture.

5. L'équipement est analogue au point 1, mais il se différencie par le fait que la paroi du rebord la paroi du rebord ayant la plus petite hauteur a un bec à un angle de 48 - 53° par rapport à la surface horizontale.

6. L'équipement est analogue au point 1, mais il se différencie par le fait que le chariot pour amener les pneus dans la chambre a un servomoteur de retournement, par exemple, un servomoteur par chaîne.

7. L'équipement est analogue au point 1, mais il se différencie par le fait que l'axe du manche, sur lequel est posé l'appareil de manutention, et le cylindre du servomoteur pneumatique de l'appareil de manutention sont montés sur un seul axe.

8. L'équipement est analogue au point 2, mais il se différencie par le fait que des cliquets mécaniques avec des cylindres de puissance pneumatiques sont montés des deux côtés de l'orifice.

9. L'équipement est analogue au point 1, mais il se différencie par le fait que le caisson de la chambre a une étanchéité de type boîte, répartie en fonction du périmètre de la chambre et du bord inférieur de l'orifice.
